# EUROPEAN PATENT SPECIFICATION

(11) **EP 4 535 760 B1**
(45) Date of publication and mention of the grant of the patent: **07.10.2026**
(21) Application number: 23816195.4
(22) Date of filing: 16.03.2023
(51) Int. Cl.: H04L 67/1097, H04L 67/1074, H04L 9/00

(54) **SYSTEM AND METHOD FOR INTER-SHARD TRANSACTION IN BLOCKCHAIN NETWORK**
SYSTEM UND VERFAHREN FÜR INTER-SHARD-TRANSAKTIONEN IN EINEM BLOCKCHAIN-NETZWERK
SYSTÈME ET PROCÉDÉ DE TRANSACTION INTER-FRAGMENT DANS UN RÉSEAU DE CHAÎNE DE BLOCS

(30) Priority: 03.06.2022 KR 20220068036
(43) Date of publication of application: 09.04.2025
(73) Proprietor: Bloom Technology, Inc., Seongnam-si, Gyeonggi-do 13487 (KR)
(72) Inventor: JOO, Young Hyun, Yongin-si Gyeonggi-do 16862 (KR)
(74) Representative: Murgitroyd & Company
(86) International application number: PCT/KR2023/003516
(87) International publication number: WO 2023/234526

(56) References cited:
- KR-A- 20200 058 273
- KR-A- 20200 073 979
- KR-A- 20210 082 396
- KR-A- 20210 097 560
- US-A1- 2020 026 548
- HUANG HUAWEI ET AL: "BrokerChain: A Cross-Shard Blockchain Protocol for Account/Balance-based State Sharding", IEEE INFOCOM 2022 - IEEE CONFERENCE ON COMPUTER COMMUNICATIONS, IEEE, 2 May 2022 (2022-05-02), pages 1968 - 1977, XP034137067, DOI: 10.1109/INFOCOM48880.2022.9796859
- MIZRAHI AVI ET AL: "Blockchain State Sharding With Space-Aware Representations", IEEE TRANSACTIONS ON NETWORK AND SERVICE MANAGEMENT, IEEE, USA, vol. 18, no. 2, 15 October 2020 (2020-10-15), pages 1571 - 1583, XP011860257, DOI: 10.1109/TNSM.2020.3031355

## Description

### [TECHNICAL FIELD]

The present disclosure relates to an inter-shard transaction system and method in a blockchain network, and more specifically, to a system and method for inter-shard transaction between accounts belonging to different shards (working shards) in a blockchain network applying dynamic sharding technique.

### [BACKGROUND ART]

Blockchain is a decentralized distributed transaction management technology that emerged to break away from the traditional centralized method in which a centralized institution stores transaction details in a single point. Blockchain is a distributed ledger system that makes it impossible to forge or modify records by having all participants in a P2P (Peer-to-Peer) communication network own a shared ledger determined through a consensus algorithm. In other words, a distributed ledger system is a system in which each node synchronizes and maintains a database called a ledger in a distributed environment without the control of a central administrator.

In order for all nodes in the blockchain to maintain a synchronized ledger, all transactions and blocks occurring in the network must be stored. To this end, conventionally, all messages are propagated to all nodes in the blockchain network through a flooding method. However, this entails the problem of scalability, which is the problem that all nodes must receive and store every message.

To solve the scalability problem, a sharding method has recently been proposed in the blockchain field, which distributes multiple nodes to multiple shard groups and divides multiple transactions into each shard for parallel processing. Sharding is a method that divides transactions and blocks occurring in a blockchain network into small groups called shards, allowing nodes belonging to each shard to process only the transactions and blocks of their own shard without having to process the transactions and blocks of other shards, thereby reducing the transaction processing volume of the entire network and the size of the distributed ledger.

However, with the introduction of sharding, the number of nodes for verifying transactions decreases in proportion to the number of shards, which increases the risk of data manipulation due to consensus attacks by malicious nodes. Consensus attacks are the most dangerous types of attacks on blockchains. In blockchains, a verification committee, which includes multiple nodes, basically verifies blocks through consensus of the majority of the committee, and blocks that fail to reach consensus are excluded from selection and removed from the chain.

In a typical blockchain, tens to hundreds of thousands of nodes are included in the verification committee, so it is realistically impossible for malicious nodes to occupy more than half. However, if when sharding techniques are introduced, since the frequency of transactions, the number of nodes, and the ratio of validators differ for each shard, an imbalance may occur between shards over time, which may cause the stability of some shards to become vulnerable. In other words, there may be cases where malicious nodes occupy more than half in some shards, and if the number of malicious nodes exceeds half, there is a risk of false blocks being connected to the chain. In other words, when a sharding technique is applied, the number of nodes that an attacker needs to recruit is reduced, making it easier to recruit more than half of the nodes, which increases the risk of false blocks being connected to the chain.

To solve this problem, even after the shards have been defined, it is necessary to rearrange the members (nodes) of each shard to balance the shards. In addition, when the overall traffic of the blockchain network increases, it is necessary to increase the number of shards. The present applicant proposes a technique of rebalancing the members of shards and increasing the number of shards as a dynamic sharding technique.

Meanwhile, in a blockchain network that applies sharding technique, accounts only share information about accounts belonging to their own shard and do not have information about accounts belonging to other shards. Therefore, for inter-shard transactions between accounts belonging to different shards, it is necessary to know the shard information of the counterpart account.

Accordingly, even if the shard to which an account belongs changes by applying dynamic sharding technique, the shard information of the account should continue to be tracked and shared, and the shard information of the account should be retrievable during inter-shard transactions.

Conventional sharding solutions have addressed scalability and load balancing in various ways. For instance, HUANG HUAWEI ET AL., 'BrokerChain: A Cross-Shard Blockchain Protocol for Account/Balance-based State Sharding' proposes a protocol that addresses imbalanced transaction distributions and 'hot shards' by partitioning account states and utilizing 'broker accounts' to facilitate cross-shard transactions. Furthermore, MIZRAHI AVI ET AL., 'Blockchain State Sharding With Space-Aware Representations' explores traffic-aware sharding schemes aimed at reducing cross-shard transaction rates through memory-efficient mappings, such as Bloom filters, to locate state parts across shards.

However, these existing approaches often rely on third-party intermediaries (brokers) or complex global mapping structures which may encounter limitations in highly dynamic environments where accounts frequently migrate. In contrast, the present invention introduces a dual-shard architecture comprising a 'home shard'-statically derived from an account address-and a 'working shard'-representing the account's current hosting location. This architecture provides a significant technical advantage by enabling the systematic tracking and retrieval of an account's working shard information through its predictable home shard. Consequently, the present disclosure facilitates efficient inter-shard transactions even during frequent shard rebalancing, without the overhead of maintaining global state maps or constant reliance on intermediaries for routing.

### [DETAILED DESCRIPTION OF INVENTION]

### [TECHNICAL PROBLEMS]

The objective of the present disclosure is to satisfy the above-mentioned needs, and to provide a system and method for tracking a shard (working shard) to which an account belongs in a blockchain network to which dynamic sharding technique is applied, and processing inter-shard transactions between accounts belonging to different shards (working shards).

### [TECHNICAL SOLUTION]

The present disclosure can be implemented in various ways, including a device (system), a method, a computer program stored in a computer-readable medium, or a computer-readable medium having a computer program stored therein.

A system for inter-shard transaction in a blockchain network, according to one embodiment of the present invention, is included in a first node that manages a first sender account that performs a first transaction. The first node comprises: a home shard calculation unit that computes home shard information of a first receiver account that performs the first transaction based on information on an address of the first receiver account and information on a total number of shards; a working shard information request unit that requests working shard information of the first receiver account to a second node that has a home shard of the first receiver account as a working shard; a working shard information reception unit that receives the working shard information of the first receiver account from the second node; and a transaction transmission unit that requests the first transaction to a node that manages the first receiver account.

More preferably, the first node further comprises a receiver account search unit that searches whether the first receiver account is included in an account belonging to a working shard of the first sender account.

More preferably, the working shard of the first node is a home shard of a second receiver account that performs a second transaction, and the first node further comprises: an account directory management unit that updates working shard information of the second receiver account with the latest information and stores it in an account directory; an account directory search unit that searches the account directory for the working shard information of the second receiver account when the working shard information of the second receiver account is requested from a third node that manages a second sender account that performs the second transaction; and a working shard information transmission unit that transmits the searched working shard information of the second receiver account to the third node.

More preferably, the first node is a node that manages a third receiver account that performs a third transaction, and the first node further comprises a transaction reception unit that when the third transaction is requested from a fourth node that manages a third sender account that performs the third transaction, receives and processes the requested third transaction.

More preferably, the working shard information request unit generates a working shard information request message requesting the working shard information of the first receiver account, and transmits the working shard information request message to communication target nodes based on an intra-shard communication node list and an inter-shard communication list through peer-to-peer communication to be received by the second node, and the transaction transmission unit generates a transaction request message requesting the first transaction to the first receiver node, and transmits the transaction request message to communication target nodes based on the intra-shard communication node list and the inter-shard communication list through peer-to-peer communication to be received by the node managing the first receiver account.

More preferably, the working shard information transmission unit generates a receiver account working shard information message including the working shard information of the second receiver account, and transmits the receiver account working shard information message to communication target nodes based on an intra-shard communication node list and an inter-shard communication list through peer-to-peer communication to be received by the third node.

Further, a method for inter-shard transaction, according to the present disclosure, which is implemented by at least one processor on a first node that manages a first sender account that performs a first transaction, comprises the following steps performed by the first node: computing home shard information of a first receiver account that performs the first transaction based on information on an address of the first receiver account and information on a total number of shards; requesting working shard information of the first receiver account to a second node that has a home shard of the first receiver account as a working shard; receiving the working shard information of the first receiver account from the second node; and requesting the first transaction to a node that manages the first receiver account.

More preferably, the method further comprises a step in which the first node searches whether the first receiver account is included in an account belonging to a working shard of the first sender account.

More preferably, the working shard of the first node is a home shard of a second receiver account that performs a second transaction, and the method further comprises the following steps performed by the first node: updating working shard information of the second receiver account with the latest information and storing it in an account directory; searching the account directory for the working shard information of the second receiver account when the working shard information of the second receiver account is requested from a third node that manages a second sender account that performs the second transaction; and transmitting the searched working shard information of the second receiver account to the third node.

More preferably, the first node is a node that manages a third receiver account that performs a third transaction, and the method further comprises a step in which when the third transaction is requested from a fourth node that manages a third sender account that performs the third transaction, the first node receives and processes the requested third transaction.

More preferably, the step of requesting the working shard information of the first receiver account to the second node that has the home shard of the first receiver account as the working shard, includes generating a working shard information request message requesting the working shard information of the first receiver account, and transmitting the working shard information request message to communication target nodes based on an intra-shard communication node list and an inter-shard communication list through peer-to-peer communication to be received by the second node. The step of requesting the first transaction to the node that manages the first receiver account includes generating a transaction request message requesting the first transaction to the first receiver node, and transmitting the transaction request message to communication target nodes based on the intra-shard communication node list and the inter-shard communication list through peer-to-peer communication to be received by the node managing the first receiver account.

More preferably, the step of transmitting the searched working shard information of the second receiver account to the third node includes generating a receiver account working shard information message including the working shard information of the second receiver account, and transmitting the receiver account working shard information message to communication target nodes based on an intra-shard communication node list and an inter-shard communication list through peer-to-peer communication to be received by the third node.

### [EFFECT OF INVENTION]

According to the present disclosure, the following effects are achieved.

By dividing a blockchain network into shard units to process transactions and blocks, the present disclosure can reduce the transaction processing volume and the size of the distributed ledger, which increases the scalability of the blockchain network.

The present disclosure can block the risk of malicious nodes being concentrated in any shard by periodically and randomly changing and rebalancing nodes and/or accounts belonging to the shards.

By introducing the concept of a home shard and a working shard, enabling the home shard information of an arbitrary account to be derived by computation, storing information of the working shard, which is the shard to which the account currently belongs, in the home shard of the account, and updating the changed working shard information in the home shard of the account when an arbitrary account changes the working shard, the present disclosure enables the tracking of the working shard of the account even when the account moves between the working shards.

The present disclosure can support inter-shard transactions between any two accounts by allowing a transaction sending account to obtain working shard information of a receiver account through the home shard of the receiver account.

The effects of the present disclosure are not limited to those mentioned above, and other effects not mentioned can be clearly understood from the description of the claims by a person having ordinary knowledge in the art to which the present disclosure pertains (hereinafter referred to as "those skilled in the art").

### [BRIEF DESCRIPTION OF THE DRAWING]

Embodiments of the present disclosure will be described with reference to the accompanying drawings, in which like reference numerals represent like components, but the present is not limited thereto.
FIG. 1 is a diagram illustrating a conceptual diagram of a blockchain network divided into three shards according to the present disclosure.
FIG. 2 is a block diagram illustrating an exemplary configuration of a node including a transaction system of an account according to the present disclosure.
FIG. 3 is a diagram illustrating information stored in a data storage to implement a transaction system of an account according to the present disclosure.
FIG. 4 is a diagram illustrating a configuration of an inter-shard transaction system according to one embodiment of the present disclosure.
FIG. 5 is a flowchart illustrating an inter-shard transaction method according to one embodiment of the present disclosure.

### (Description of Reference Numerals)

222: account transaction system 224: account management module
226: peer-to-peer communication module 228: working shard update module
230: transaction processing module 232: home shard calculation module
411: receiver account search unit 412: home shard calculation unit
413: working shard information request unit 414: working shard information reception unit
415: transaction transmission unit 421: account directory management unit
422: account directory search unit 423: working shard information transmission unit
431: transaction reception unit

Embodiments of the present disclosure will be described with reference to the accompanying drawings, in which like reference numerals represent like components, but the present disclosure is not limited thereto.

### [MODE FOR CARRYING OUT THE INVENTION]

Hereinafter, specific details for implementing the present disclosure will be described in detail with reference to the accompanying drawings. However, in the following description, specific descriptions of widely known functions or configurations will be omitted if they may unnecessarily obscure the gist of the present disclosure.

In the accompanying drawings, identical or corresponding components are given the same reference numerals. In addition, in the following description of the embodiments, duplicate description of identical or corresponding components may be omitted. However, the omission of the description of a component does not intend that such a component is not included in any embodiment.

The advantages and features of the embodiments disclosed in the present specification, and the methods for achieving them, will become apparent by referring to the embodiments described below in conjunction with the accompanying drawings. However, the present disclosure is not limited to the embodiments disclosed below, but may be implemented in various different forms, and these embodiments are only provided to fully inform those skilled in the art related to the present disclosure of the scope of the present disclosure.

Unless otherwise defined, all terms (including technical and scientific terms) used in the present specification may be used with a meaning that can be commonly understood by those skilled in the art to which the present disclosure pertains. In addition, terms defined in commonly used dictionaries should not be ideally or excessively interpreted unless explicitly specifically defined.

For example, the term "technique" may refer to systems, methods, computer-readable instructions, modules, algorithms, hardware logic, and/or operations as permitted by the context described above and throughout the entire document.

The terms used in the present specification will be briefly explained, followed by a detailed description of the disclosed embodiments. The terms used in the present specification have been selected from widely used general terms as much as possible while considering the functions in the present disclosure, but this may vary depending on the intention of engineers engaged in the relevant field, precedents, or the emergence of new technologies. In addition, in certain cases, there are terms arbitrarily selected by the applicant, and in this case, the meanings thereof will be described in detail in the relevant description of the invention. Therefore, the terms used in the present disclosure should be defined based on the meanings of the terms and the overall contents of the present disclosure, rather than simply the names of the terms.

In the present specification, singular expressions include plural expressions unless the context clearly specifies that they are singular. In addition, plural expressions include singular expressions unless the context clearly specifies that they are plural. Throughout the specification, when a part is described as including a certain component, this means that, unless explicitly stated otherwise, other components are not excluded and may also be included.

In the present disclosure, terms such as "include," "comprising," and the like may indicate the presence of features, operations, elements, and or components, but do not exclude the possibility of the addition of one or more other functions, operations, elements, components, and/or combinations thereof.

In the present disclosure, when a specific component is referred to as being "coupled," "combined," "connected," "associated," or "reacting" with any other component, the specific component may be directly coupled, combined, connected, and/or associated with, or reacting with, the other component, but the present disclosure is not limited thereto. For example, one or more intermediate components may exist between the specific component and the other component. Furthermore, "and/or" in the present disclosure may include each of one or more items listed or a combination of at least some of the one or more items listed.

In the present disclosure, terms such as "first", "second", etc. are used to distinguish specific components from other components, and such terms do not limit the components described. For example, a "first" component may be used to refer to a component identical or similar in form to a "second" component.

In the present disclosure, a 'blockchain network' refers to a group of multiple computers (nodes) that participate in a blockchain system and communicate with each other peer-to-peer via the Internet, etc., and a 'node' in the present disclosure may be a computer that participates in the blockchain network. Here, computer is a comprehensive term for all devices having CPU, memory, communication, and input/output functions, and specifically may include a server computer, a personal computer (PC), a mobile phone terminal, a small home appliance, etc.

Nodes can share and spread information through the blockchain network. Nodes manage user accounts. Accounts managed by nodes may include accounts of node owners (hereinafter referred to as host accounts) and accounts entrusted for management by other users (hereinafter referred to as guest accounts). A node may store all information about host accounts and guest accounts it manages, transmit them to other nodes in the blockchain network, and receive updated information about host accounts and guest accounts managed by each of the other nodes.

In the present disclosure, the term 'account' refers to a user account participating in a blockchain, and may be a data structure representing a user. An account may add information to a blockchain system by issuing transaction, and may be a linked list of transactions issued by a user. A transaction may be a unit of data that a user adds to the system. An account may own a node and directly manage its own transaction information, and such an account may be referred to as a host account. Alternatively, an account may entrust another user's node to manage its transaction information, and such an account may be referred to as a guest account, and the node entrusted with account management may be referred to as a delegate node. Node and account authentication may be performed using an encryption key, and transactions may be signed using the same encryption key. A guest account may operate a node by itself to become a host account, or may change its delegate node, and a host account may select a delegate node to become a guest account.

In the present disclosure, a 'transaction' refers to a unit of information added to the blockchain, which can be issued by one account alone. The content of a transaction is nominally arbitrary information provided by a user, and may actually be a meaningful message within the system. For example, a transaction may include messages such as "Account A sent 100 coins to Account B", "Account B received 100 coins from Account A", etc. In the present disclosure, the serial numbers of the transaction start from 0 and increase by 1 for each transaction, and an Account-Wise Transaction Chain (AWTC) that manages a ledger for each account is used. The technology for the Account-Wise Transaction Chain (AWTC) can be understood by referring to the contents described in Korean Patent Application Publication No. 2021-0015196.

In the present disclosure, a 'block' may be a signed list of transactions added to a shard or blockchain network during a specific period of time. A block may be created by signing a list of generated transactions through a consensus algorithm. Only one block may be created at a time, and a blockchain may be constructed by adding a new block to the existing list of blocks.

In the present disclosure, a 'shard' may be a subset of nodes participating in a blockchain network. The entire blockchain network is generally divided into two or more shards, and if not divided, all nodes are considered to participate in one shard, and each shard has a unique address. Typically, in a blockchain network that applies the sharding technique, nodes belonging to the same shard communicate peer-to-peer with each other, and shares the Account-Specific Transaction Chain (AWTC) of all accounts belonging to the same shard.

In the present disclosure, every account can have one working shard and one home shard. The working shard and the home shard of any account may be the same or different from each other. In the present disclosure, the 'home shard' of an account may be computed based on a function that takes the address of the account and the total number of shards as parameters. In the present disclosure, the 'working shard' of an account is a shard to which the account currently belongs and operates, and may be a typical shard. That is, in the present disclosure, working shards may communicate with each other peer-to-peer between the same nodes, and share the Account-Wise Transaction Chain (AWTC) of all accounts belonging to the same working shard.

In the present disclosure, an 'intra-shard transaction' may refer to a transaction between nodes having the same working shard. In the present disclosure, an 'inter-shard transaction' may refer to a transaction between nodes having different working shards.

Each shard can have a set of nodes and accounts that have the corresponding shard as their home shard, and a set of nodes and accounts that have the corresponding shard as their working shard. A node should belong to one working shard.

A node can move from one working shard to another, and when a node moves between working shards, the host accounts and guest accounts managed by the node can move between working shards simultaneously. Any account can move from one working shard to another independently of the node.

In addition, each node belonging to the blockchain network includes a shard rebalancing algorithm, and when certain conditions are met, the shard rebalancing algorithm can be executed to change the working shard of the corresponding node and account.

In the present disclosure, 'peer-to-peer communication' in the blockchain network and shards may mean that when a node receives some information, it replicates the received information and transmits it to other nodes, and the node receiving the information also replicates the information and transmits it to other nodes, repeating this process so that after a sufficient period of time, all nodes belonging to the blockchain network and shards share the information.

In the present disclosure, a 'neighbor shard' of a shard may be a shard having an address whose bit distance is 1 from the address of the corresponding shard. A bit distance of 1 means that when comparing two binary values digit by digit, only one digit value is different. For example, for binary value '0101', a binary value that differs only in the 1st digit value is '0100', a binary value that differs only in the 2nd digit value is '0111', a binary value that differs only in the 3rd digit value is '0001', and a binary value that differs only in the 4th digit value is '1101'. Therefore, for binary value '0101', binary value '0100', binary value '0111', binary value '0001', and binary value '1101' are all binary values that differ only in one digit value. In this way, in the present disclosure, a binary value that differs in only one digit for any binary value is defined as having a bit distance of 1, and a shard with an address having a bit distance of 1 from the address of any shard is defined as a neighbor shard.

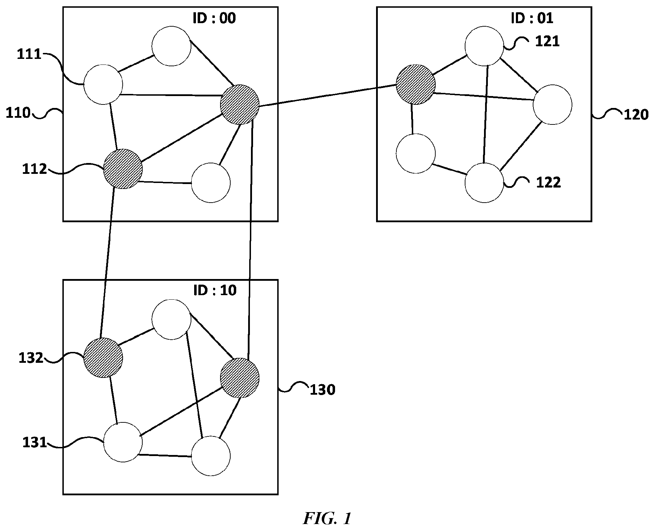

FIG. 1 is a diagram illustrating a conceptual diagram of a blockchain network divided into three shards according to the present disclosure.

A plurality of nodes that makes up a blockchain network may be divided into three shards 110, 120, 130, but the present disclosure is not limited thereto. The number of shards may increase as the number of nodes and accounts in the blockchain network increases, and in this case, a single shard may be divided into two. Each shard 110, 120, 130 may be a working shard of nodes currently belonging to the shard. Nodes currently belonging to the working shard may all share the same information.

Each node may include an intra-shard communication node list that stores information on peer-to-peer communication targets (intra-shard communication nodes) among the nodes within the working shard, and an inter-shard communication node list that stores information on peer-to-peer communication targets (inter-shard communication nodes) among the nodes outside the working shard.

The intra-shard communication nodes, which are the communication targets within the working shard of each node, may be determined according to Kademlia rules. The inter-shard communication nodes, which are the communication target outside the working shard of each node, may be randomly determined as some of the nodes belonging to the neighbor shards.

Based on the intra-shard communication node list and inter-shard communication node list determined in this way, information sharing through peer-to-peer communication within and outside the working shard becomes possible. A node may have different information to share with the intra-shard communication nodes from information to share with the inter-shard communication nodes. In other words, information shared with the inter-shard communication nodes. The intra-shard communication nodes and inter-shard communication nodes included in the intra-shard communication node list and inter-shard communication node list assigned to each node may be randomly reconfigured.

In FIG. 1, nodes 111, 121, 131 communicating with nodes within the working shard are indicated by unhatched circles, and nodes 112, 122, 132 communicating with nodes outside the working shard are indicated by hatched circles. Nodes 112, 122, 132 communicating with nodes outside the working shard can communicate with nodes belonging to neighbor shards based on the inter-shard communication node list. Here, a neighbor shard may be a shard whose address has a bit distance of 1. A bit distance of 1 may mean that the address of the shard differs only in one digit value. That is, addresses having a bit distance of 1 from address '00' may be '01' and '10'.

In the example of FIG. 1, when the address of a first shard 110 is '00', the address of a second shard 120 is '01', and the address of a third shard 130 is '10', since the address '00' of the first shard 110 and the address '01' of the second shard 120 are different in one digit value, they have a bit distance of 1. Similarly, since the address '00' of the first shard 110 and the address '10' of the third shard 130 are different in one digit value, they have a bit distance of 1. However, the address '01' of the second shard 110 and the address '10' of the third shard 130 are different in two digit values, so that they do not have a bit distance of 1.

Therefore, the first and second shards are neighboring shards and can communicate directly, and the first and third shards are neighboring shards and can communicate directly. However, since the second and third shards are not neighboring shards, they cannot communicate directly and can communicate through the first shard, which is their neighbor shard.

Each node in FIG. 1 includes a shard rebalancing algorithm, and the shard rebalancing algorithm may be executed according to preset conditions. The shard rebalancing algorithm may use the Bounded Cuckoo algorithm, but is not limited thereto. The Bounded Cuckoo algorithm is described in detail in the RapidChain introduction material (see RapidChain: Scaling Blockchain via Full Sharding, https://eprint.iacr.org/2018/460.pdf). In the present disclosure, the health index of shards may be calculated based on the Bounded Cuckoo algorithm to be classified into strong shards and weak shards, and some nodes are periodically randomly extracted from the strong shards and moved to the weak shards.

When the shard rebalancing algorithm is executed, nodes to change their working shards are randomly selected, and the working shards of the nodes may be reallocated and changed. When the working shard of a node is changed, the corresponding node can perform the working shard change procedure for all host accounts and guest accounts that it manages.

In addition, a node may perform individually the working shard change procedure for the host accounts and guest accounts that it manages. For example, when a node changes a guest account, under its delegated management, belonging to a different working shard, the node may perform the working shard change procedure for the corresponding guest account. Alternatively, when a node takes on the delegated management of a third account previously managed by a node belonging to a different working shard, the node may perform the working shard change procedure for the third account.

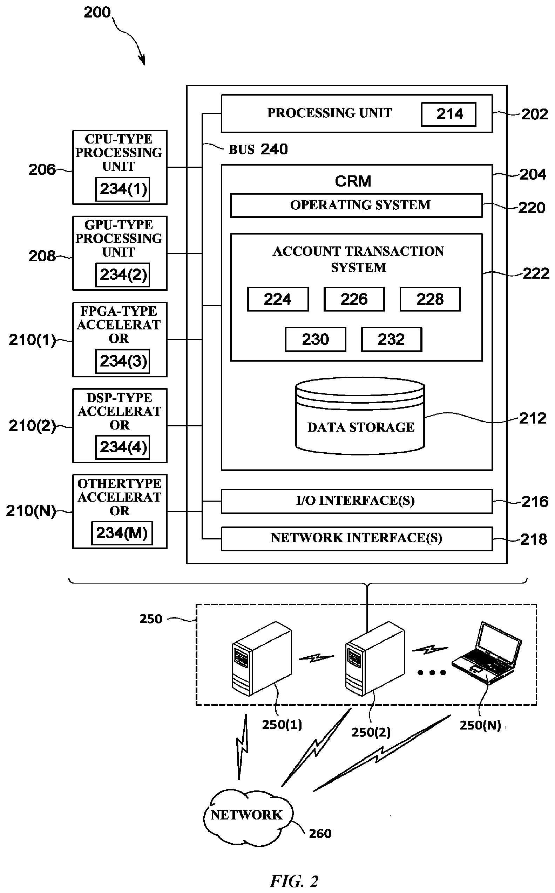

FIG. 2 is a block diagram illustrating an exemplary configuration of a node 200 including a transaction system of an account according to the present disclosure. Each node may be implemented as a computer device.

In some examples, various devices and/or components of the node 200 may include distributed computer resources 250 that can communicate with each other and external devices via one or more networks 260.

In various embodiments, the distributed computer resources 250 may include devices 250(1) to 250(N).

Embodiments of the present disclosure support scenarios in which the distributed computer resources 250 may include one or more computer devices for operating in a cluster or other grouped configuration to share resources, distributing load, increasing performance, or for other purposes.

The distributed computer resources 250 may encompass a variety of device categories, including traditional server-type devices, desktop computer-type devices, mobile devices, special-purpose devices, embedded devices, and/or wearable devices. Thus, although described as desktop and laptop computers, the distributed computer resources 250 may include a variety of device types and are not limited to a particular type of device. The distributed computer resources 250 may be integrated components for inclusion in a desktop computer, a server computer, a web server computer, a personal computer, a mobile computer, a laptop computer, a tablet computer, a wearable computer, an implantable computer, a communication device, an automotive computer, a network-enabled television, a thin client, a terminal, a PDA, a game console, a game device, a workstation, a media player, a personal video recorder (PVR), a set-top box, a camera, or a computing device.

The node 200 may be a single computer device that is a distributed computer resource 250. The node 200 may include any type of computer device having one or more processing units 202 operably connected to computer readable media (CRM) 204 via a bus 240, and in some cases, may include one or more of the above.

The bus 240 may include a system bus, a data bus, an address bus, a PCI bus, a mini PCI bus, and various local, peripheral, and/or independent buses.

In the node 200, the processing unit 202 may include, for example, a CPU-type processing unit, a GPU-type processing unit, a field programmable gate array (FPGA), a digital signal processor (DSP), or other hardware logic component that can be driven by a CPU.

For example, such hardware logic components may include application-specific integrated circuits (ASICs), application-specific standard products (ASPs), system-on-a-chip (SOC) systems, complex programmable logic devices (CPLDs), etc. Specifically, the CRM 204 may store instructions executable by an external processing unit 208, such as an external CPU-type processing unit 206, or an external GPU-type processing unit 208, and/or an external accelerator 210, such as an FPGA-type accelerator 210(1), a DSP-type accelerator 210(2), or other accelerator 210(N).

The CRM 204 described herein may include computer storage media and/or communication media.

The computer storage media may include any type of storage unit, removable and non-removable computer storage medium, such as volatile memory, non-volatile memory, and/or other permanent or auxiliary computer storage mediums implemented by any method or technology for storage of information such as computer-readable instructions, data structures, program modules or other data.

The computer storage media may be RAM, static RAM (SRAM), dynamic RAM (DRAM), phase change memory (PRAM), read-only memory (ROM), erasable programmable read-only memory (EPROM), electrically erasable programmable read-only memory (EEPROM), flash memory, DVDs, optical storage media, magnetic cassettes, magnetic tape, solid state memory (SSD), etc.

Executable instructions stored in the CRM 204 may include other modules, programs or applications that are loadable and executable by an operating system 220 and the processing unit 202.

Additionally or alternatively, what is functionally described herein may be performed at least in part by one or more hardware logic components, such as an accelerator.

For example, exemplary types of hardware logic components that may be used include field-programmable gate arrays (FPGAs), application-specific integrated circuits (ASICs), application-specific standard products (ASSPs), system-on-a chip system (SOC), complex programmable logic devices (CPLDs), etc. For example, the accelerator may be a hybrid device from XILINX or ALTERA that includes a CPU embedded in an FPGA fabric.

In the illustrated embodiment, the CRM 204 may also include a data storage 212. In some embodiments, the data storage 212 may include a data storage such as a database, a data warehouse, or other type of structured or unstructured data storage.

In some embodiments, the data storage 212 may include a corpus and/or a relational database having one or more tables that enable data access, such as web tables including one or more HyperText Markup Language (HTML) tables, Resource Description Framework (RDF) tables, Web Ontology Language (OWL) tables, and/or Extensible Markup Language (XML) tables, indexes, stored procedures, etc.

For example, the data storage 212 may store data and/or instructions for the operation of processes, applications, components and/or modules stored in the CRM 204 and executed by the processing unit 202.

The node 200 may further include one or more input/output (I/O) interfaces 216, wherein the I/O interfaces 216 enables the node 200 to communicate with user input devices including peripheral input devices (e.g., a keyboard, a mouse, a pen, a game controller, a voice input device, a touch input device, a gesture input device, a camera, etc.) and input/output devices that can communicate with peripheral output devices (e.g., a display, a printer, etc.).

In addition, the node 200 may be a node of a blockchain network and may further include one or more input/output (I/O) network interfaces 218 that enable the node 200 to communicate with other nodes of the blockchain network via the network 260.

The input/output (I/O) network interfaces 218 may include one or more network interface controllers (NICs) or other types of transceiver devices for transmitting and receiving communications over the network 260.

The network 260 may include a public network, such as the Internet, a private network, such as institutional and/or personal intranet, or a combination of private and public networks. The network 260 may include any type of wired and/or wireless network including, but not limited to, a local area network (LAN), a wide area network (WAN), a satellite network, a cable network, a Wi-Fi network, and a WiMax network, a mobile communication network (e.g., 3G, 4G, 5G, etc.), or any combination thereof. The network 260 may utilize communication protocols including packet-based and/or datagram-based protocols, such as Internet Protocol (IP), Transmission Control Protocol (TCP), User Datagram Protocol (UDP), or other types of protocols.

Furthermore, the network 260 may include various devices that facilitate network communications or form the hardware foundation for the network, such as switches, routers, gateways, access points, firewalls, base stations, repeaters, and backbone devices.

In some embodiments, the network 260 may further include devices that enable connection to a wireless network, such as a wireless access point (WAP). Embodiments according to the present disclosure may include a WAP that supports the Institute of Electrical and Electronics Engineers (IEEE) 802.11 standard (e.g., 802.11g, 802.11n, etc.) to support connection via the WAP that transmits and receives data over various electromagnetic frequencies (e.g., radio frequencies).

In the illustrated embodiment, the CRM 204 may include an operating system 220 and an account transaction system 222. The account transaction system 222 may include one or more modules and/or APIs illustrated as blocks 224, 226, 228, 230, and 232, but this is merely illustrative and the number of modules and/or APIs may be greater or less. The functions described with respect to each block 224, 226, 228, 230, and 232 may be combined to be performed by fewer modules and/or APIs, or may be divided to be performed by a greater number of modules and/or APIs.

Alternatively, some or all of the operating system, data stored in the data store, and the transaction system of the account may be stored in a separate memory 234, such as memory 214 on the processing unit 202, memory 234(1) on the CPU-type processing unit 206, memory 234(2) on the GPU-type processing unit 208, memory 234(3) on the FPGA-type accelerator 210(1), memory 234(4) on the DSP-type accelerator 210(2), and/or memory 234(M) on other accelerator 210(N).

The transaction system 222 of the account may include an account management module 224, a peer-to-peer communication module 226, a working shard update module 228, a transaction processing module 230, and a home shard calculation module 232.

The account management module 224 can manage host accounts and guest accounts. The account management module 224 can receive and store the Account-Wise Transaction Chain (AWTC) for all accounts belonging to the same working shard.

The peer-to-peer communication module 226 can transmit any message generated within the working shard to other nodes within the working shard and to nodes outside the working shard through peer-to-peer communication based on the intra-shard communication node list and the inter-shard communication node list. The peer-to-peer communication module 226 can process messages generated in the node itself or messages shared from other nodes or share the messages with other nodes. This message sharing may be performed across multiple nodes, but for convenience, the procedure for sharing the message will be omitted.

When the working shard of any account is changed, the working shard update module 228 can update the working shard information stored in the home shard of the account with the changed working shard information. In this case, the account whose working shard is changed may be called a moving account, the working shard of the moving account before the change may be called an origin shard, and the working shard of the moving account after the change may be called a destination shard.

That is, when the working shard of a moving account is changed from the origin shard to the destination shard, the nodes belonging to the home shard of the moving account (nodes that have the home shard of the moving account as their working shard), the nodes belonging to the origin shard of the moving account (nodes that have the origin shard of the moving account as their working shard), and the nodes belonging to the destination shard of the moving account (nodes that have the destination shard of the moving account as their working shard) may each operate differently.

Accordingly, the working shard update module 228 can determine whether it belongs to the home shard of the moving account, the origin shard of the moving account, or the destination shard of the moving account, and perform different working shard update operations.

The transaction processing module 230 can process a transaction between any two accounts. The transaction processing module 230 can process an intra-shard transaction when the two accounts belong to the same working shard, and an inter-shard transaction when the two accounts belong to different working shards. In this case, the account that attempts the transaction may be called a sender account, and the account that is the target of the transaction may be called a receiver account, and the node that manages the sender account (the sender node), the node that belongs to the home shard of the receiver account (the node that has the home shard of the receiver account as the working shard), and the node that manages the receiver account (the receiver node) may each operate differently.

The home shard calculation module 232 can compute the home shard address of any account based on information on the account address and the total number of shards. The home shard calculation module 232 can be driven by a working shard update module 282 and the transaction processing module 230, and when the working shard update module 282 requests the home shard information of a moving account or the transaction processing module 230 requests the home shard information of a receiver account, the home shard calculation module 232 can compute the home shard address of the corresponding account by applying the address of the account and the total number of shards to a function that takes the address of the account and the total number of shards as parameters.

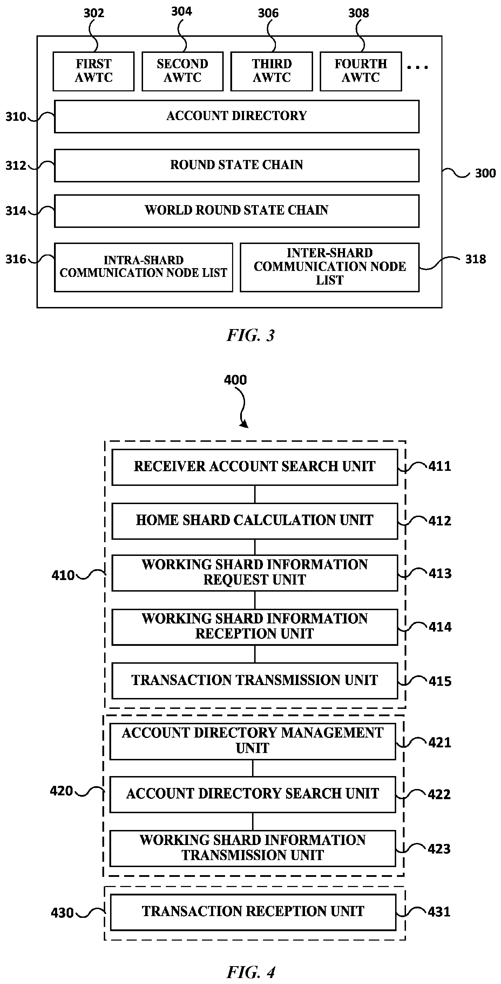

FIG. 3 is a diagram illustrating information stored in a data storage 300 to implement a transaction system of an account according to the present disclosure.

The data storage 300 of the node may store Account-Wise transaction Chains (AWTC) 302, 304, 306, 308 of all accounts belonging to the working shard of the node, an account directory 310 storing working shard history for accounts that have the working shard of the node as their home shard, a round state chain 312 combining account-specific transactions of all accounts belonging to the working shard and storing a chain of round state blocks agreed upon by all nodes belonging to the working shard as a chain, a world round state chain 314 combining all round state blocks belonging to the blockchain network and storing a chain of world round state blocks agreed upon, an intra-shard communication node list 316 storing information on communication target nodes within the working shard of the node, and an inter-shard communication node list 318 storing information on communication target nodes outside the working shard of the node.

The account directory 310 stores working shard history for accounts that have the working shard of the node as their home shard. In this example, for convenience, it is assumed that each node manages only one account, that is, a host account. Therefore, in this example, a node may be equivalent to an account. For example, in the example of FIG. 1, if the home shard of an account belonging to node 111 is the second shard 120, information on the first shard 110 is stored as working shard information of the account belonging to node 111 in the account directories of node 121 and node 122 that have the second shard 120 as their working shard. Meanwhile, in the example of FIG. 1, if the home shard of the account belonging to node 112 is the third shard 130, the information on the first shard 110 is stored as the working shard information of the account belonging to node 112 in the account directories of node 131 and node 132 that have the third shard as the working shard.

As explained above, nodes and accounts can change their working shards. Even if the working shard is changed in this way, the working shard update module of the present disclosure is operated so that the changed working shard information can be updated in the nodes belonging to the home shard of the corresponding account.

In the present disclosure, it is preferable that the account directories of nodes that have the home shard of any account as their working shard are updated with the latest working shard address of the corresponding account by the working shard update module.

FIG. 4 is a block diagram illustrating an inter-shard transaction system according to one embodiment of the present disclosure. The inter-shard transaction system may be implemented by a computer system of a node.

In the present disclosure, a 'transaction' refers to a unit of information added to a blockchain, which can be issued solely by an account, and the content of the transaction may be any information or meaningful message provided by a user. In the present disclosure, an account that attempts to make a transaction is called a sender account, a node that manages the sender account is called a sender node, an account that is the target of the transaction is called a receiver account, and a node that manages the receiver account is called a receiver node. An inter-shard transaction refers to a transaction between a sender account and a receiver account when the sender account and the receiver account belong to different working shards.

Each node may act as a sender node, a node belonging to the home shard of the receiver account, or a receiver node in an inter-shard transaction, depending on the case. Here, 'node belonging to the home shard of the receiver account' may refer to a node that has the home shard of the receiver account as its working shard and stores information about the working shard of the receiver account.

The inter-shard transaction system may comprise a module 410 that operates when the node is a sender node, which is a management node of a sender account, a module 420 that operates when the node is a node belonging to a home shard of a receiver account, and a module 430 that operates when the node is a receiver node, which is a management node of a receiver account.

The module 410 that operates when the node is a sender node includes a receiver account search unit 411 that searches whether a receiver account is included in an account belonging to a working shard of a sender account, a home shard calculation unit 412 that computes home shard information of the receiver account based on information on the address of the receiver account and information on the total number of shards, a working shard information request unit 413 that requests working shard information of the receiver account to a node belonging to the home shard of the receiver account, a working shard information reception unit 414 that receives working shard information of the receiver account from the node belonging to the home shard of the receiver account, and a transaction transmission unit 415 that requests a transaction to the receiver account.

The module 420 that operates when the node is a node belongs to a home shard of a receiver account includes an account directory management unit 421 that updates and manages working shard information of an account that has a working shard of the node as a home shard, an account directory search unit 422 that searches the account directory for the working shard of a receiver account when working shard information of the receiver account is requested from any other sender node, and a working shard information transmission unit 423 that transmits the searched working shard information of the receiver account to the corresponding sender node.

The module 430 that operates when the node is a receiver node includes a transaction reception unit 431 that when a transaction is requested from any other sender node, receives and processes the requested transaction.

First, the operation of each component of the module 410 that operates when the node is a sender node will be described.

The receiver account search unit 411 searches whether the receiver account is included in the account belonging to the working shard of the sender account. If the receiver account is included in the working shard of the sender account, the working shards of the sender account and the receiver account are the same, and the transaction can be processed as an intra-shard transaction. However, if the receiver account is not included in the working shard of the sender account, the working shards of the sender account and the receiver account are different, and thus the transaction can be processed as an inter-shard transaction.

In the case of a blockchain network to which the dynamic sharding technique of the present disclosure is applied, since the working shard of each account changes, the sender account needs to know the information on the working shard of the receiver account when requesting a transaction to the receiver account. The account directory management unit of the 'node belonging to the home shard of the receiver account' of the present disclosure updates and manages the working shard information of the receiver account in the account directory.

The home shard calculation unit 412 computes the home shard information of the receiver account using a function that takes as parameters the address of the receiver account and the total number of shards of the blockchain network. The home shard of the receiver account may be a shard allocated when the receiver account is initially created, or may be a shard newly created by dividing from the initially assigned shard.

The working shard information request unit 413 generates a working shard information request message requesting the working shard information of the receiver account to the 'node belonging to the home shard of the receiver account'. The sender node transmits the working shard information request message to the communication target nodes based on the intra-shard communication node list 316 and the inter-shard communication node list 318 through peer-to-peer communication, and the nodes that have received the working shard information request message share the working shard information request message with their respective intra-shard communication nodes and inter-shard communication nodes through peer-to-peer communication. In this way, the working shard information request message can be transmitted to the 'node belonging to the home shard of the receiver account' through peer-to-peer communication.

The 'node belonging to the home shard of the receiver account' updates and manages the working shard information of the receiver account. When the 'node belonging to the home shard of the receiver account' receives a working shard information request message, it searches its own account directory to extract the working shard information of the receiver account, creates a receiver account working shard information message, and sends it to the sender node through inter-shard and intra-shard peer-to-peer communication.

The working shard of the sender node may be the home shard of the receiver account, in which case the sender node and the 'node belonging to the home shard of the receiver account' may be the same, so that module 420 of FIG. 4 may be operated. Further, in this case, the procedure for creating, sending, and receiving a working shard information request message may be omitted, and the sender node may search its own account directory to obtain the working shard information of the receiver account.

The working shard information receiving unit 414 of the sender node receives the receiver account working shard information message from the 'node belonging to the home shard of the receiver account' to obtain the working shard information of the receiver account. When the working shard of the sender node is the home shard of the receiver account, that is, when the sender node and the 'node belonging to the home shard of the receiver account' are the same, the procedure for receiving the working shard information message of the receiver account may be omitted.

In addition, the transaction sending unit 415 of the sender node generates a transaction request message to the receiver account based on the working shard information of the receiver account, and transmits the transaction request message to the receiver node through intra-shard and inter-shard peer-to-peer communication.

The receiver node receives and processes the transaction request message.

Next, the operation of each component of the module 420 that operates when the node is a node belonging to the home shard of the receiver account will be described.

The account directory management unit 421 updates and manages the working shard information of accounts that have the working shard of the corresponding node as their home shard. As described above, when the shard rebalancing algorithm is executed, the working shards of some nodes may be changed, and in this case, the host account and guest account managed by the corresponding node may move together to the changed working shard. In addition, any account may change its working shard for various reasons. In this way, when the accounts belonging to the node and the working shards of individual accounts are changed, the changed working shard information of the corresponding account may be updated in the node belonging to the home shard of the corresponding account (the node that has the home shard of the corresponding account as its working shard).

When receiving a message requesting working shard information of a receiver account is received from any sender node (which may be the own node or another node), the account directory search unit 422 searches the account directory to extract the working shard information of the receiver account.

The working shard information transmission unit 423 generates a receiver account working shard information message including the extracted working shard information of the receiver account and transmits it to the sender node through peer-to-peer communication.

Next, the operation of each component of the module 430 that operates when the node is a receiver node will be described.

The transaction reception unit 431 receives a transaction request message from any sender node and processes the transaction.

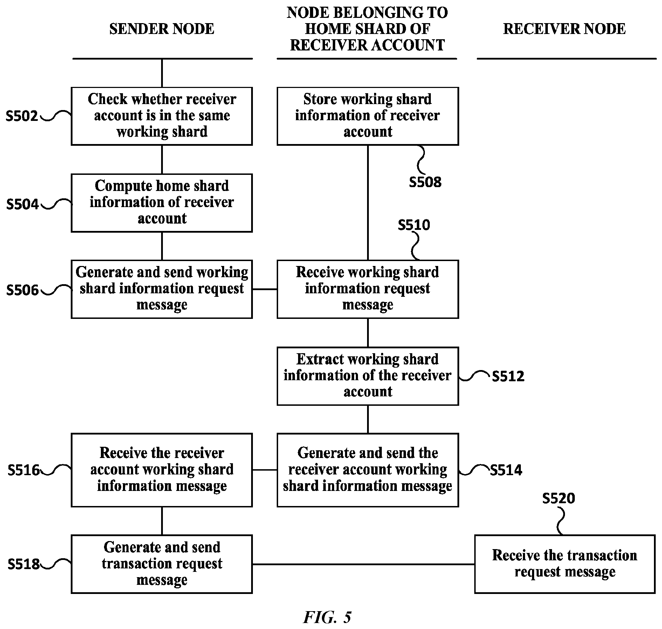

FIG. 5 is a flow chart illustrating an inter-shard transaction method according to one embodiment of the present disclosure.

The operations of the exemplary process are illustrated as individual blocks and are described with reference to those blocks. The process is illustrated as a logical flow of blocks, each of which may represent one or more operations that may be implemented in hardware, software, or a combination thereof. With respect to software, the operations represent computer-executable instructions stored on one or more computer-readable media that, when executed by one or more processors, cause the one or more processors to perform the operations cited. Generally, computer-executable instructions include routines, programs, objects, modules, components, data structures, performing specific functions, or implementing specific abstract data types. The order in which the operations are described should not be construed as limiting, and the operations described may be executed in any order, subdivided into multiple sub-operations, or executed in parallel.

The sender node checks whether the receiver account is in the same working shard (S502). That is, the sender node checks whether the receiver account is included in the account belonging to the working shard of the sender account. When the receiver account belongs to the working shard of the sender account, the transaction is processed as an intra-shard transaction, and when the receiver account does not belong to the working shard of the sender account, the transaction is processed as an inter-shard transaction according to the present disclosure.

The sender node computes the home shard information of the receiver account using a function that takes as parameters the address of the receiver account and the total number of shards of the blockchain network (S504).

The sender node generates a working shard information request message requesting working shard information of the receiver account, and sends it to the 'node belonging to the home shard of the receiver account' (the node that has the home shard of the receiver account as its working shard) (S506). The sender node transmits the working shard information request message to the communication target nodes based on the intra-shard communication node list and the inter-shard communication node list through peer-to-peer communication, and the nodes that have received the working shard information request message share the working shard information request message with their respective intra-shard communication nodes and inter-shard communication nodes through peer-to-peer communication. In this way, the working shard information request message can be transmitted to the 'node belonging to the home shard of the receiver account' through peer-to-peer communication.

The 'node belonging to the home shard of the receiver account' updates and manages the working shard information of the receiver account in the account directory (S508).

As a result of step S506, the 'node belonging to the home shard of the receiver account' receives the working shard information request message requesting the working shard information of the receiver account (S510).

The 'node belonging to the home shard of the receiver account' extracts the working shard information of the receiver account by extracting the information of the receiver account from the received working shard information request message and searching the account directory based on the extracted information of the receiver account to (S512).

The 'node belonging to the home shard of the receiver account" generates and sends a receiver account working shard information message including the working shard information of the receiver account (S514). The 'node belonging to the home shard of the receiver account' transmits the receiver account working shard information message to the communication target nodes based on its intra-shard communication node list and inter-shard communication list through peer-to-peer communication, and the nodes that have received the receiver account working shard information message share the receiver account working shard information message with their respective intra-shard communication nodes and inter-shard communication nodes through peer-to-peer communication. In this way, the receiver account working shard information message can be transmitted to the sender node through peer-to-peer communication.

As a result of step S514, the sender node receives the receiver account working shard information message (S516).

Since the sender node has obtained the working shard information of the receiver account, it generates and sends a message (transaction request message) requesting a transaction to the receiver account based on the working shard information of the receiver account (S518). The sender node transmits the transaction request message to its intra-shard communication nodes and inter-shard communication nodes through peer-to-peer communication, and the nodes that have received the transaction request message share the transaction request message with their respective intra-shard communication nodes and inter-shard communication nodes through peer-to-peer communication. In this way, the transaction request message can be transmitted to the receiver node through peer-to-peer communication.

As a result of step S518, the receiver node receives the transaction request message (S520).

The sender node and the receiver node can complete transaction processing through mutual communication.

All of the methods and processes described above may be implemented and fully automated as software code modules executed by one or more general-purpose computers or processors. The code modules may be stored on any type of computer readable storage medium or other computer storage device. Some or all of the methods may be implemented using specialized computer hardware.

Any routine descriptions, elements or blocks of the flowchart described herein and/or illustrated in the accompanying drawings should be understood to potentially represent code, modules, segments or portions that include one or more executable instructions for implementing a particular logical function or element. Alternative examples fall within the scope of the examples described herein, and based on the functions understood herein, elements or functions may be deleted or executed in the order in which they are illustrated or discussed, substantially synchronously or in reverse order.

While the present disclosure has been described above with specific details such as specific components, limited embodiments and drawings, these have been provided only to help a more general understanding of the present disclosure, and the present disclosure is not limited to the above embodiments, and various modifications and variations may be made by those having ordinary skill in the art to which the present disclosure pertains.

## Claims

1. A system (400)
for performing inter-shard transactions in a blockchain network comprising a first node that manages a first sender account that initiates a first transaction to be received by a first receiver account,
wherein the first node comprises:
a home shard calculation unit that computes home shard information of the first receiver account based on an address of the first receiver account and the total number of shards;
a working shard information request unit that requests working shard information of the first receiver account from a second node, wherein the second node has a home shard of the first receiver account as a working shard;
a working shard information reception unit that receives the working shard information of the first receiver account from the second node; and
a transaction transmission unit that uses the received working shard information of the first receiver account to identify a node that manages the first receiver account and transmits a request for the first transaction to the identified node.

2. The inter-shard transaction system of claim 1, wherein the first node further comprises a receiver account search unit that determines whether the first receiver account belongs to the same working shard as the first sender account.

3. The inter-shard transaction system of claim 1, wherein the working shard of the first node is the home shard of a second receiver account that receives a second transaction, and
wherein the first node further comprises:
an account directory management unit that updates the working shard information of the second receiver account with the latest information and stores the updated working shard information in an account directory;
an account directory search unit that searches the account directory and retrieves the working shard information of the second receiver account when the working shard information of the second receiver account is requested by a third node that manages a second sender account that initiates the second transaction; and
a working shard information transmission unit that transmits the retrieved working shard information of the second receiver account to the third node.

4. The inter-shard transaction system of claim 1, wherein the first node is a node that manages a third receiver account that receives a third transaction, and
wherein the first node further comprises a transaction reception unit that when the third transaction is requested by a fourth node that manages a third sender account that initiates the third transaction, receives and processes the requested third transaction.

5. The inter-shard transaction system of claim 1, wherein the working shard information request unit generates a working shard information request message requesting the working shard information of the first receiver account, and transmits the working shard information request message to communication target nodes based on an intra-shard communication node list and an inter-shard communication list through peer-to-peer communication to be received by the second node, and
wherein the transaction transmission unit generates, for the node that manages the first receiver account, a transaction request message for the first transaction, and transmits the transaction request message to communication target nodes based on the intra-shard communication node list and the inter-shard communication list through peer-to-peer communication so that the transaction request message is received by the node that manages the first receiver account.

6. The inter-shard transaction system of claim 3, wherein the working shard information transmission unit generates a receiver account working shard information message including the working shard information of the second receiver account, and transmits the receiver account working shard information message to communication target nodes based on an intra-shard communication node list and an inter-shard communication list through peer-to-peer communication to be received by the third node.

7. A computer-implemented method for performing inter-shard transactions in a blockchain network comprising a first node that manages a first sender account that initiates a first transaction to be received by a first receiver account, the method comprising:
computing (S504) home shard information of the first receiver account based on an address of the first receiver account and the total number of shards;
requesting (S506) working shard information of the first receiver account from a second node, wherein the second node has a home shard of the first receiver account as a working shard;
receiving (S516) the working shard information of the first receiver account from the second node; and
using the received working shard information of the first receiver account to identify a node that manages the first receiver account and transmitting (S518) a request for the first transaction to the identified node.

8. The inter-shard transaction method of claim 7, comprising determining whether the first receiver account belongs to the same working shard as the first sender account.

9. The inter-shard transaction method of claim 7, wherein the working shard of the first node is the home shard of a second receiver account that receives a second transaction, and
wherein the method further comprises:
updating the working shard information of the second receiver account with the latest information and storing the updated working shard information in an account directory;
searching the account directory and retrieving the working shard information of the second receiver account when the working shard information of the second receiver account is requested by a third node that manages a second sender account that initiates the second transaction; and
transmitting the retrieved working shard information of the second receiver account to the third node.

10. The inter-shard transaction method of claim 7, wherein the first node is a node that manages a third receiver account that receives a third transaction, and
wherein the method further comprises, when the third transaction is requested by a fourth node that manages a third sender account that initiates the third transaction, receiving and processing the requested third transaction.

11. The inter-shard transaction method of claim 7, wherein requesting the working shard information of the first receiver account from
the second node that has the home shard of the first receiver account as the working shard, includes generating a working shard information request message requesting the working shard information of the first receiver account, and transmitting the working shard information request message to communication target nodes based on an intra-shard communication node list and an inter-shard communication list through peer-to-peer communication to be received by the second node, and
wherein transmitting a request for the first transaction to the node that manages the first receiver account includes generating, for the node that manages the first receiver account, a transaction request message for the first transaction, and transmitting the transaction request message to communication target nodes based on the intra-shard communication node list and the inter-shard communication list through peer-to-peer communication so that the transaction request message is received by the node that manages the first receiver account.

12. The inter-shard transaction method of claim 9, wherein transmitting the retrieved working shard information of the second receiver account to the third node includes generating a receiver account working shard information message including the working shard information of the second receiver account, and transmitting the receiver account working shard information message to communication target nodes based on an intra-shard communication node list and an inter-shard communication list through peer-to-peer communication to be received by the third node.

## Patentansprüche

1. Ein System (400) zur Durchführung von Inter-Shard-Transaktionen in einem Blockchain-Netzwerk, das einen ersten Knoten beinhaltet, der ein erstes Senderkonto verwaltet, das eine erste Transaktion initiiert, die durch ein erstes Empfängerkonto empfangen werden soll,
wobei der erste Knoten Folgendes beinhaltet:
eine Home-Shard-Berechnungseinheit, die Home-Shard-Informationen des ersten Empfängerkontos basierend auf einer Adresse des ersten Empfängerkontos und der Gesamtanzahl von Shards errechnet;
eine Working-Shard-Informationsanforderungseinheit, die Working-Shard-Informationen des ersten Empfängerkontos von einem zweiten Knoten anfordert, wobei der zweite Knoten einen Home-Shard des ersten Empfängerkontos als einen Working-Shard aufweist;
eine Working-Shard-Informationsempfangseinheit, die die Working-Shard-Informationen des ersten Empfängerkontos von dem zweiten Knoten empfängt; und
eine Transaktionsübertragungseinheit, die die empfangenen Working-Shard-Informationen des ersten Empfängerkontos verwendet, um einen Knoten zu identifizieren, der das erste Empfängerkonto verwaltet, und eine Anforderung der ersten Transaktion an den identifizierten Knoten überträgt.

2. Inter-Shard-Transaktionssystem gemäß Anspruch 1, wobei der erste Knoten ferner eine Empfängerkontosucheinheit beinhaltet, die bestimmt, ob das erste Empfängerkonto zu demselben Working-Shard gehört wie das erste Senderkonto.

3. Inter-Shard-Transaktionssystem gemäß Anspruch 1, wobei der Working-Shard des ersten Knotens der Home-Shard eines zweiten Empfängerkontos ist, das eine zweite Transaktion empfängt, und
wobei der erste Knoten ferner Folgendes beinhaltet:
eine Kontoverzeichnisverwaltungseinheit, die die Working-Shard-Informationen des zweiten Empfängerkontos mit den neuesten Informationen aktualisiert und die aktualisierten Working-Shard-Informationen in einem Kontoverzeichnis speichert;
eine Kontoverzeichnissucheinheit, die das Kontoverzeichnis durchsucht und die Working-Shard-Informationen des zweiten Empfängerkontos abruft, wenn die Working-Shard-Informationen des zweiten Empfängerkontos von einem dritten Knoten angefordert werden, der ein zweites Senderkonto verwaltet, das die zweite Transaktion initiiert; und
eine Working-Shard-Informationsübertragungseinheit, die die abgerufenen Working-Shard-Informationen des zweiten Empfängerkontos an den dritten Knoten überträgt.

4. Inter-Shard-Transaktionssystem gemäß Anspruch 1, wobei der erste Knoten ein Knoten ist, der ein drittes Empfängerkonto verwaltet, das eine dritte Transaktion empfängt, und wobei der erste Knoten ferner eine Transaktionsempfangseinheit beinhaltet, die, wenn die dritte Transaktion von einem vierten Knoten angefordert wird, der ein drittes Senderkonto verwaltet, das die dritte Transaktion initiiert, die angeforderte dritte Transaktion empfängt und verarbeitet.

5. Inter-Shard-Transaktionssystem gemäß Anspruch 1, wobei die Working-Shard-Informationsanforderungseinheit eine Working-Shard-Informationsanforderungsnachricht, die die Working-Shard-Informationen des ersten Empfängerkontos anfordert, generiert und die Working-Shard-Informationsanforderungsnachricht basierend auf einer Intra-Shard-Kommunikationsknotenliste und einer Inter-Shard-Kommunikationsliste durch Peer-to-Peer-Kommunikation an Kommunikationszielknoten überträgt, damit diese durch den zweiten Knoten empfangen wird, und
wobei die Transaktionsübertragungseinheit für den Knoten, der das erste Empfängerkonto verwaltet, eine Transaktionsanforderungsnachricht für die erste Transaktion generiert und die Transaktionsanforderungsnachricht basierend auf der Intra-Shard-Kommunikationsknotenliste und der Inter-Shard-Kommunikationsliste durch Peer-to-Peer-Kommunikation an Kommunikationszielknoten überträgt, sodass die Transaktionsanforderungsnachricht durch den Knoten, der das erste Empfängerkonto verwaltet, empfangen wird.

6. Inter-Shard-Transaktionssystem gemäß Anspruch 3, wobei die Working-Shard-Informationsübertragungseinheit eine Empfängerkonto-Working-Shard-Informationsnachricht, die die Working-Shard-Informationen des zweiten Empfängerkontos umfasst, generiert und die Empfängerkonto-Working-Shard-Informationsnachricht basierend auf einer Intra-Shard-Kommunikationsknotenliste und einer Inter-Shard-Kommunikationsliste durch Peer-to-Peer-Kommunikation an Kommunikationszielknoten überträgt, damit diese durch den dritten Knoten empfangen wird.

7. Ein computerimplementiertes Verfahren zur Durchführung von Inter-Shard-Transaktionen in einem Blockchain-Netzwerk, das einen ersten Knoten beinhaltet, der ein erstes Senderkonto verwaltet, das eine erste Transaktion initiiert, die durch ein erstes Empfängerkonto empfangen werden soll, wobei das Verfahren Folgendes beinhaltet:
Errechnen (S504) von Home-Shard-Informationen des ersten Empfängerkontos basierend auf einer Adresse des ersten Empfängerkontos und der Gesamtanzahl von Shards;
Anfordern (S506) von Working-Shard-Informationen des ersten Empfängerkontos von einem zweiten Knoten, wobei der zweite Knoten einen Home-Shard des ersten Empfängerkontos als einen Working-Shard aufweist;
Empfangen (S516) der Working-Shard-Informationen des ersten Empfängerkontos von dem zweiten Knoten; und
Verwenden der empfangenen Working-Shard-Informationen des ersten Empfängerkontos, um einen Knoten zu identifizieren, der das erste Empfängerkonto verwaltet, und Übertragen (S518) einer Anforderung der ersten Transaktion an den identifizierten Knoten.

8. Inter-Shard-Transaktionsverfahren gemäß Anspruch 7, das das Bestimmen beinhaltet, ob das erste Empfängerkonto zu demselben Working-Shard gehört wie das erste Senderkonto.

9. Inter-Shard-Transaktionsverfahren gemäß Anspruch 7, wobei der Working-Shard des ersten Knotens der Home-Shard eines zweiten Empfängerkontos ist, das eine zweite Transaktion empfängt, und
wobei das Verfahren ferner Folgendes beinhaltet:
Aktualisieren der Working-Shard-Informationen des zweiten Empfängerkontos mit den neuesten Informationen und Speichern der aktualisierten Working-Shard-Informationen in einem Kontoverzeichnis;
Durchsuchen des Kontoverzeichnisses und Abrufen der Working-Shard-Informationen des zweiten Empfängerkontos, wenn die Working-Shard-Informationen des zweiten Empfängerkontos von einem dritten Knoten angefordert werden, der ein zweites Senderkonto verwaltet, das die zweite Transaktion initiiert; und
Übertragen der abgerufenen Working-Shard-Informationen des zweiten Empfängerkontos an den dritten Knoten.

10. Inter-Shard-Transaktionsverfahren gemäß Anspruch 7, wobei der erste Knoten ein Knoten ist, der ein drittes Empfängerkonto verwaltet, das eine dritte Transaktion empfängt, und
wobei das Verfahren, wenn die dritte Transaktion von einem vierten Knoten angefordert wird, der ein drittes Senderkonto verwaltet, das die dritte Transaktion initiiert, ferner das Empfangen und Verarbeiten der angeforderten dritten Transaktion beinhaltet.

11. Inter-Shard-Transaktionsverfahren gemäß Anspruch 7, wobei das Anfordern der Working-Shard-Informationen des ersten Empfängerkontos von dem zweiten Knoten, der den Home-Shard des ersten Empfängerkontos als den Working-Shard aufweist, das Generieren einer Working-Shard-Informationsanforderungsnachricht, die die Working-Shard-Informationen des ersten Empfängerkontos anfordert, und das Übertragen der Working-Shard-Informationsanforderungsnachricht an Kommunikationszielknoten basierend auf einer Intra-Shard-Kommunikationsknotenliste und einer Inter-Shard-Kommunikationsliste durch Peer-to-Peer-Kommunikation, damit diese durch den zweiten Knoten empfangen wird, umfasst und
wobei das Übertragen einer Anforderung der ersten Transaktion an den Knoten, der das erste Empfängerkonto verwaltet, das Generieren, für den Knoten, der das erste Empfängerkonto verwaltet, einer Transaktionsanforderungsnachricht für die erste Transaktion und das Übertragen der Transaktionsanforderungsnachricht an Kommunikationszielknoten basierend auf der Intra-Shard-Kommunikationsknotenliste und der Inter-Shard-Kommunikationsliste durch Peer-to-Peer-Kommunikation, sodass die Transaktionsanforderungsnachricht durch den Knoten, der das erste Empfängerkonto verwaltet, empfangen wird, umfasst.

12. Inter-Shard-Transaktionsverfahren gemäß Anspruch 9, wobei das Übertragen der abgerufenen Working-Shard-Informationen des zweiten Empfängerkontos an den dritten Knoten das Generieren einer Empfängerkonto-Working-Shard-Informationsnachricht, die die Working-Shard-Informationen des zweiten Empfängerkontos umfasst, und das Übertragen der Empfängerkonto-Working-Shard-Informationsnachricht an Kommunikationszielknoten basierend auf einer Intra-Shard-Kommunikationsknotenliste und einer Inter-Shard-Kommunikationsliste durch Peer-to-Peer-Kommunikation, damit diese durch den dritten Knoten empfangen wird, umfasst.

## Revendications

1. Un système (400) pour la réalisation de transactions inter-fragment dans un réseau de chaîne de blocs comprenant un premier nœud qui gère un premier compte émetteur qui lance une première transaction à recevoir par un premier compte récepteur,
dans lequel le premier nœud comprend :
une unité de calcul de fragment de rattachement qui calcule des informations de fragment de rattachement du premier compte récepteur sur la base d'une adresse du premier compte récepteur et du nombre total de fragments ;
une unité de demande d'informations de fragment de travail qui demande des informations de fragment de travail du premier compte récepteur à un deuxième nœud, le deuxième nœud ayant un fragment de rattachement du premier compte récepteur comme fragment de travail ;
une unité de réception d'informations de fragment de travail qui reçoit les informations de fragment de travail du premier compte récepteur en provenance du deuxième nœud ; et
une unité d'émission de transaction qui utilise les informations de fragment de travail du premier compte récepteur reçues pour identifier un nœud qui gère le premier compte récepteur et émet une demande pour la première transaction à destination du nœud identifié.

2. Le système de transaction inter-fragment de la revendication 1, dans lequel le premier nœud comprend en outre une unité de recherche de compte récepteur qui détermine si le premier compte récepteur appartient au même fragment de travail que le premier compte émetteur.

3. Le système de transaction inter-fragment de la revendication 1, dans lequel le fragment de travail du premier nœud est le fragment de rattachement d'un deuxième compte récepteur qui reçoit une deuxième transaction, et
dans lequel le premier nœud comprend en outre :
une unité de gestion de répertoire de comptes qui met à jour les informations de fragment de travail du deuxième compte récepteur avec les informations les plus récentes et stocke les informations de fragment de travail mises à jour dans un répertoire de comptes ;
une unité de recherche dans le répertoire de comptes qui recherche dans le répertoire de comptes et récupère les informations de fragment de travail du deuxième compte récepteur lorsque les informations de fragment de travail du deuxième compte récepteur sont demandées par un troisième nœud qui gère un deuxième compte émetteur qui lance la deuxième transaction ; et
une unité d'émission d'informations de fragment de travail qui émet les informations de fragment de travail du deuxième compte récepteur récupérées à destination du troisième nœud.

4. Le système de transaction inter-fragment de la revendication 1, dans lequel le premier nœud est un nœud qui gère un troisième compte récepteur qui reçoit une troisième transaction, et
dans lequel le premier nœud comprend en outre une unité de réception de transaction qui, lorsque la troisième transaction est demandée par un quatrième nœud qui gère un troisième compte émetteur qui lance la troisième transaction, reçoit et traite la troisième transaction demandée.

5. Le système de transaction inter-fragment de la revendication 1, dans lequel l'unité de demande d'informations de fragment de travail génère un message de demande d'informations de fragment de travail demandant les informations de fragment de travail du premier compte récepteur, et émet le message de demande d'informations de fragment de travail à destination de nœuds cibles de communication sur la base d'une liste de nœuds de communication intra-fragment et d'une liste de communication inter-fragment au moyen d'une communication pair à pair à recevoir par le deuxième nœud, et
dans lequel l'unité d'émission de transaction génère, pour le nœud qui gère le premier compte récepteur, un message de demande de transaction pour la première transaction, et émet le message de demande de transaction à destination de nœuds cibles de communication sur la base de la liste de nœuds de communication intra-fragment et de la liste de communication inter-fragment au moyen d'une communication pair à pair de sorte que le message de demande de transaction soit reçu par le nœud qui gère le premier compte récepteur.

6. Le système de transaction inter-fragment de la revendication 3, dans lequel l'unité d'émission d'informations de fragment de travail génère un message d'informations de fragment de travail de compte récepteur incluant les informations de fragment de travail du deuxième compte récepteur, et émet le message d'informations de fragment de travail de compte récepteur à destination de nœuds cibles de communication sur la base d'une liste de nœuds de communication intra-fragment et d'une liste de communication inter-fragment au moyen d'une communication pair à pair à recevoir par le troisième nœud.

7. Un procédé mis en œuvre par ordinateur pour la réalisation de transactions inter-fragment dans un réseau de chaîne de blocs comprenant un premier nœud qui gère un premier compte émetteur qui lance une première transaction à recevoir par un premier compte récepteur, le procédé comprenant :
le calcul (S504) d'informations de fragment de rattachement du premier compte récepteur sur la base d'une adresse du premier compte récepteur et du nombre total de fragments ;
la demande (S506) d'informations de fragment de travail du premier compte récepteur à un deuxième nœud, le deuxième nœud ayant un fragment de rattachement du premier compte récepteur comme fragment de travail ;
la réception (S516) des informations de fragment de travail du premier compte récepteur en provenance du deuxième nœud ; et
l'utilisation des informations de fragment de travail du premier compte récepteur reçues pour identifier un nœud qui gère le premier compte récepteur et l'émission (S518) d'une demande pour la première transaction à destination du nœud identifié.

8. Le procédé de transaction inter-fragment de la revendication 7, comprenant la détermination quant à savoir si le premier compte récepteur appartient au même fragment de travail que le premier compte émetteur.

9. Le procédé de transaction inter-fragment de la revendication 7, dans lequel le fragment de travail du premier nœud est le fragment de rattachement d'un deuxième compte récepteur qui reçoit une deuxième transaction, et
le procédé comprenant en outre :
la mise à jour des informations de fragment de travail du deuxième compte récepteur avec les informations les plus récentes et le stockage des informations de fragment de travail mises à jour dans un répertoire de comptes ;
la recherche dans le répertoire de comptes et la récupération des informations de fragment de travail du deuxième compte récepteur lorsque les informations de fragment de travail du deuxième compte récepteur sont demandées par un troisième nœud qui gère un deuxième compte émetteur qui lance la deuxième transaction ; et
l'émission des informations de fragment de travail du deuxième compte récepteur récupérées à destination du troisième nœud.

10. Le procédé de transaction inter-fragment de la revendication 7, dans lequel le premier nœud est un nœud qui gère un troisième compte récepteur qui reçoit une troisième transaction, et
le procédé comprenant en outre, lorsque la troisième transaction est demandée par un quatrième nœud qui gère un troisième compte émetteur qui lance la troisième transaction, la réception et le traitement de la troisième transaction demandée.

11. Le procédé de transaction inter-fragment de la revendication 7, dans lequel la demande des informations de fragment de travail du premier compte récepteur au deuxième nœud, qui a le fragment de rattachement du premier compte récepteur comme fragment de travail, inclut la génération d'un message de demande d'informations de fragment de travail demandant les informations de fragment de travail du premier compte récepteur, et l'émission du message de demande d'informations de fragment de travail à destination de nœuds cibles de communication sur la base d'une liste de nœuds de communication intra-fragment et d'une liste de communication inter-fragment au moyen d'une communication pair à pair à recevoir par le deuxième nœud, et
dans lequel l'émission d'une demande pour la première transaction à destination du nœud qui gère le premier compte récepteur inclut la génération, pour le nœud qui gère le premier compte récepteur, d'un message de demande de transaction pour la première transaction, et l'émission du message de demande de transaction à destination de nœuds cibles de communication sur la base de la liste de nœuds de communication intra-fragment et de la liste de communication inter-fragment au moyen d'une communication pair à pair de sorte que le message de demande de transaction soit reçu par le nœud qui gère le premier compte récepteur.

12. Le procédé de transaction inter-fragment de la revendication 9, dans lequel l'émission des informations de fragment de travail du deuxième compte récepteur récupérées à destination du troisième nœud inclut la génération d'un message d'informations de fragment de travail de compte récepteur incluant les informations de fragment de travail du deuxième compte récepteur, et l'émission du message d'informations de fragment de travail de compte récepteur à destination de nœuds cibles de communication sur la base d'une liste de nœuds de communication intra-fragment et d'une liste de communication inter-fragment au moyen d'une communication pair à pair à recevoir par le troisième nœud.
